# EUROPEAN PATENT APPLICATION

(11) **EP 4 468 587 A1**
(43) Date of publication of application: **27.11.2024**
(21) Application number: 22921857.3
(22) Date of filing: 19.01.2022
(51) Int. Cl.: H02M 7/48

(54) **POWER CONVERSION DEVICE AND AIRCRAFT**

(71) Applicant: MITSUBISHI ELECTRIC CORPORATION, Chiyoda-ku Tokyo 100-8310 (JP)
(72) Inventor: NAKASHIMA, Junichi, Tokyo 100-8310 (JP); FUJIWARA, Kenji, Tokyo 100-8310 (JP); NAGAI, Takayoshi, Tokyo 100-8310 (JP)
(74) Representative: Meissner Bolte Partnerschaft mbB
(86) International application number: PCT/JP2022/001819
(87) International publication number: WO 2023/139698

(57) **Abstract**

A power conversion device includes a first power converter (1007), a second power converter (1008), and a control device (10000). The first power converter (1007) receives an input of a DC voltage and generates a voltage to be supplied to a load. The second power converter (1008) generates an input voltage of the first power converter (1007) from a DC voltage of a power source. The control device (10000) controls the second power converter (1008). The control device (10000) determines the input voltage of the first power converter (1007) based on a position data indicating a height, a latitude and a longitude of the power conversion device, and data relative to a failure rate of the first power converter (1007) attributable to neutrons. The control device (10000) controls the second power converter (1008) to generate the input voltage determined.

## Description

### TECHNICAL FIELD

The present disclosure relates to a power conversion device and an aircraft.

### BACKGROUND ART

US 2019/152617 A (PTL 1) and Patent No. 6877660 (PTL 2) disclose an aircraft that obtains a propulsive force by rotation of a propeller connected to an electric motor. Such aircraft is equipped with a power conversion device that supplies power to the electric motor in order to drive the electric motor.

As one of causes of a failure of the power conversion device mounted on the aircraft, there is an accidental failure of a semiconductor element attributable to neutrons derived from cosmic rays. Since a height of the aircraft increases with an amount of the neutrons, a failure rate of the semiconductor element also increases as the height increases.

It is known that the failure rate of the semiconductor element attributable to the neutrons is correlated with a voltage applied to the semiconductor element. Therefore, in PTLs 1 and 2, in a case where the height of the aircraft exceeds a threshold value, the failure of the power conversion device is suppressed by lowering an input voltage of the power conversion device.

### CITATION LIST

### PATENT LITERATURE

PTL 1: US 2019/152617 A
PTL 2: Patent No. 6877660

### SUMMARY OF INVENTION

### TECHNICAL PROBLEM

The amount of the neutrons fluctuates not only depends on the height, but also on a latitude and a longitude. Therefore, in order to reliably suppress the failure of the power conversion device attributable to the neutrons, it is necessary to consider the height, the latitude, and the longitude of an environment in which the power conversion device is placed, during control of the input voltage of the power conversion device described above.

The present disclosure has been made to solve such problem, and the present disclosure aims to provide a power conversion device capable of improving reliability against the failure attributable to the neutrons.

### SOLUTION TO PROBLEM

According to one aspect of the present disclosure, a power conversion device connected between a power source and a load includes a first power converter, a second power converter, and a control device. The first power converter receives an input of a DC voltage and generates a voltage to be supplied to the load. The second power converter generates an input voltage of the first power converter from the DC voltage of the power source. The control device controls the second power converter. The control device determines the input voltage of the first power converter based on position data indicating the height, the latitude, and the longitude of the power conversion device and data relative to a failure rate of the first power converter attributable to neutrons. The control device controls the second power converter to generate the determined input voltage.

### ADVANTAGEOUS EFFECTS OF INVENTION

According to the present disclosure, it is possible to provide the power conversion device capable of improving the reliability against the failure attributable to the neutrons.

### BRIEF DESCRIPTION OF DRAWINGS

Fig. 1 is a schematic configuration diagram illustrating a first configuration example of a power system of an aircraft.
Fig. 2 is a schematic configuration diagram illustrating a second configuration example of the power system of the aircraft.
Fig. 3 is a schematic configuration diagram illustrating a third configuration example of the power system of the aircraft.
Fig. 4 is a schematic configuration diagram illustrating a fourth configuration example of the power system of the aircraft.
Fig. 5 is a schematic configuration diagram illustrating a fifth configuration example of the power system of the aircraft.
Fig. 6 is a schematic configuration diagram illustrating a sixth configuration example of the power system of the aircraft.
Fig. 7 is a diagram illustrating a first circuit configuration example of a DC/DC converter.
Fig. 8 is a diagram illustrating a configuration example of a first semiconductor element.
Fig. 9 is a diagram illustrating a second circuit configuration example of the DC/DC converter.
Fig. 10 is a diagram illustrating a third circuit configuration example of the DC/DC converter.
Fig. 11 is a diagram illustrating a fourth circuit configuration example of the DC/DC converter.
Fig. 12 is a diagram illustrating a first circuit configuration example of a DC/AC converter.
Fig. 13 is a diagram illustrating a configuration example of a second semiconductor element.
Fig. 14 is a diagram illustrating a second circuit configuration example of the DC/AC converter.
Fig. 15 is a diagram illustrating a third circuit configuration example of the DC/AC converter.
Fig. 16 is a schematic configuration diagram of a first power semiconductor module.
Fig. 17 is a diagram illustrating a mechanism for generating neutrons that may cause the accidental failure of the semiconductor element.
Fig. 18 is a diagram illustrating an experimental example of the failure rate of the semiconductor element.
Fig. 19 is a diagram illustrating variation of leakage current during irradiation with the neutrons.
Fig. 20 is a diagram illustrating a relationship between a voltage applied to the second semiconductor element and a FIT of one second semiconductor element.
Fig. 21 is a diagram illustrating a correlation between a withstand voltage and the FIT of the semiconductor element.
Fig. 22 is a diagram illustrating a correlation between a junction temperature and the FIT of the second semiconductor element.
Fig. 23 is a diagram illustrating a FIT of each of the second semiconductor element, a second power semiconductor module, and a three-phase two-level inverter circuit.
Fig. 24 is a diagram illustrating a first example of a neutron ratio calculated on the basis of height, latitude, and longitude data when the aircraft flies on an optional date.
Fig. 25 is a diagram illustrating a second example of the neutron ratio calculated on the basis of the height, the latitude, and the longitude data when the aircraft flies on the optional date.
Fig. 26 is a diagram illustrating a correlation between the FIT of the three-phase two-level inverter circuit and the neutron ratio.
Fig. 27 is a diagram illustrating a first example of the neutron ratio when the aircraft flies on the optional date, and first FIT data and the input voltage of the three-phase two-level inverter circuit.
Fig. 28 is a diagram illustrating a second example of the neutron ratio when the aircraft flies on the optional date, and second FIT data and the input voltage of the three-phase two-level inverter circuit.
Fig. 29 is a diagram illustrating comparison between the first FIT data and the second FIT data.
Fig. 30 is a diagram illustrating an example of adjustment of the input voltage of the three-phase two-level inverter circuit.
Fig. 31 is a diagram illustrating a configuration example of the power system having a function of adjusting the input voltages of the power converters.
Fig. 32 is a diagram illustrating a hardware configuration of the control device.
Fig. 33 is a flowchart illustrating an example of a procedure of a process of determining the input voltage of each of the power converters of the power system.
Fig. 34 is a flowchart illustrating another example of the procedure of the process of determining the input voltage of the each of the power converters of the power system.
Fig. 35 is a diagram illustrating an example of transition of the FIT when an input voltage of a DC/AC converter of a propulsion system is adjusted.
Fig. 36 is a diagram illustrating an example of transition of the FIT according to transition of an outside air temperature while the aircraft is in flight.
Fig. 37 is a diagram illustrating an example of the transition of the FIT when the input voltage of the DC/AC converter of the propulsion system is adjusted depending on the outside air temperature.
Fig. 38 is a diagram illustrating a configuration example of a power system according to a second embodiment.
Fig. 39 is a flowchart illustrating an example of the procedure of the process of determining the input voltage of the each of the power converters of the power system.

### DESCRIPTION OF EMBODIMENTS

Hereinafter, embodiments of the present disclosure will be described in detail with reference to the drawings. Note that the same or corresponding parts in the drawings are denoted by the same reference signs, and the description thereof will not be repeated.

### First embodiment.

### <Configuration example of power system of aircraft>

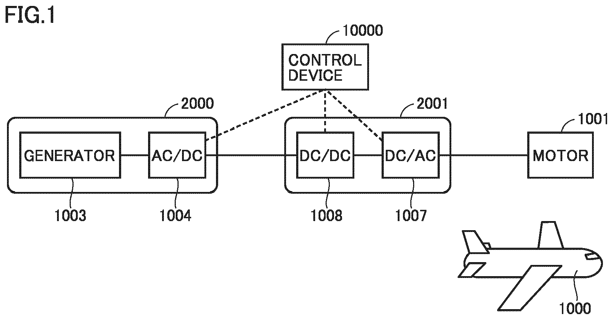

First, the configuration example of the power system of the aircraft to which the power conversion device according to the first embodiment of the present disclosure is applied will be described with reference to Figs. 1 to 6.

### (First configuration example)

Fig. 1 is a schematic configuration diagram illustrating a first configuration example of a power system of an aircraft. The aircraft is, for example, a manned or unmanned airplane, a helicopter, a drone, or the like. In the following description, the airplane is exemplified as an aircraft 1000.

As illustrated in Fig. 1, the first configuration example of the power system includes a power source 2000, a propulsion system 2001, a propulsion system motor 1001, and a control device 10000.

Power source 2000 generates a DC voltage. Specifically, power source 2000 includes a generator 1003 and an AC/DC converter 1004. Generator 1003 generates an AC voltage. AC/DC converter 1004 converts the AC voltage generated by generator 1003 into a DC voltage. AC/DC converter 1004 supplies the generated DC voltage to propulsion system 2001.

Propulsion system 2001 supplies a power generated by power source 2000 to propulsion system motor 1001. Specifically, propulsion system 2001 includes a DC/DC converter 1008 and a DC/AC converter 1007. DC/DC converter 1008 performs voltage transformation on the DC voltage to be supplied from power source 2000. DC/DC converter 1008 is configured to control an input voltage to DC/AC converter 1007. DC/AC converter 1007 converts the transformed DC voltage into an AC voltage, and supplies the converted AC voltage to propulsion system motor 1001. DC/AC converter 1007 corresponds to an example of the "first power converter". DC/DC converter 1008 corresponds to an example of the "second power converter".

Control device 10000 controls AC/DC converter 1004, DC/DC converter 1008, and DC/AC converter 1007. Control device 10000 is input with sensor information indicating detection values of various sensors disposed in AC/DC converter 1004, DC/DC converter 1008, and DC/AC converter 1007. The sensor information includes detection values of a current, a voltage, and a temperature of the each of the power converters, abnormality detection signals, and the like.

Note that although not illustrated, control device 10000 may further control generator 1003 and propulsion system motor 1001. In addition, a plurality of control devices 10000 may be disposed in the power system, and the plurality of control devices 10000 may be configured to control power source 2000, propulsion system 2001, and propulsion system motor 1001, respectively, by exchanging the signals with each other.

### (Second configuration example)

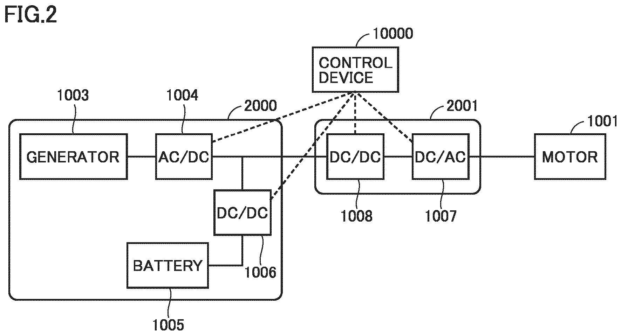

Fig. 2 is a schematic configuration diagram illustrating a second configuration example of the power system of the aircraft. The second configuration example of the power system has the same basic configuration as the first configuration example illustrated in Fig. 1, but a configuration of power source 2000 is different.

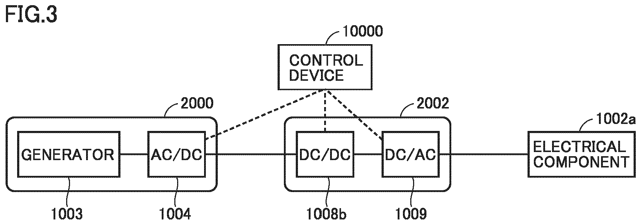

As illustrated in Fig. 2, in the second configuration example, power source 2000 further includes a battery 1005 and a DC/DC converter 1006 in addition to generator 1003 and AC/DC converter 1004. DC/DC converter 1006 performs the voltage transformation on a DC voltage of battery 1005 and supplies the transformed voltage to propulsion system 2001. In other words, power source 2000 is configured to generate a DC voltage from a power generated by generator 1003 and a power of battery 1005. Note that illustration of battery 1005 and DC/DC converter 1006 is omitted in configuration examples of Fig. 3 and subsequent drawings.

### (Third configuration example)

Fig. 3 is a schematic configuration diagram illustrating a third configuration example of the power system of the aircraft. The third configuration example of the power system is different from the first configuration example illustrated in Fig. 1 in including an electrical component system 2002 and an electrical component 1002a instead of propulsion system 2001 and propulsion system motor 1001.

As illustrated in Fig. 3, electrical component system 2002 supplies the power generated by power source 2000 to electrical component 1002a. Electrical component 1002a is, for example, an electrical component driven by the AC voltage among electrical components such as a pump, an actuator, a lighting equipment, a display, and a control panel.

Specifically, electrical component system 2002 includes a DC/DC converter 1008b and a DC/AC converter 1009. DC/DC converter 1008b performs the voltage transformation on the DC voltage to be supplied from power source 2000. DC/DC converter 1008b is configured to control an input voltage to DC/AC converter 1009. DC/AC converter 1009 converts the transformed DC voltage into an AC voltage, and supplies the converted AC voltage to electrical component 1002a. Electrical component 1002a is driven by an AC voltage to be supplied from electrical component system 2002. DC/AC converter 1009 corresponds to an example of the "first power converter". DC/DC converter 1008b corresponds to an example of the "second power converter".

### (Fourth configuration example)

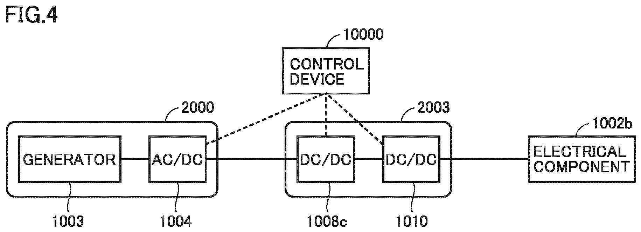

Fig. 4 is a schematic configuration diagram illustrating a fourth configuration example of the power system of the aircraft. The fourth configuration example of the power system is different from the first configuration example illustrated in Fig. 1 in including an electrical component system 2003 and an electrical component 1002b instead of propulsion system 2001 and motor 1001.

As illustrated in Fig. 4, electrical component system 2003 supplies the power generated by power source 2000 to electrical component 1002b. Electrical component 1002b is an electrical component driven by the DC voltage among the electrical components.

Specifically, electrical component system 2003 includes a DC/DC converter 1008c and a DC/DC converter 1010. DC/DC converter 1008c performs the voltage transformation on the DC voltage to be supplied from power source 2000. DC/DC converter 1008c is configured to control an input voltage to DC/DC converter 1010. DC/DC converter 1010 performs the voltage transformation on the transformed DC voltage and supplies the transformed voltage to electrical component 1002b. Electrical component 1002b is driven by a DC voltage to be supplied from electrical component system 2003. DC/AC converter 1010 corresponds to an example of the "first power converter". DC/DC converter 1008c corresponds to an example of the "second power converter".

### (Fifth configuration example)

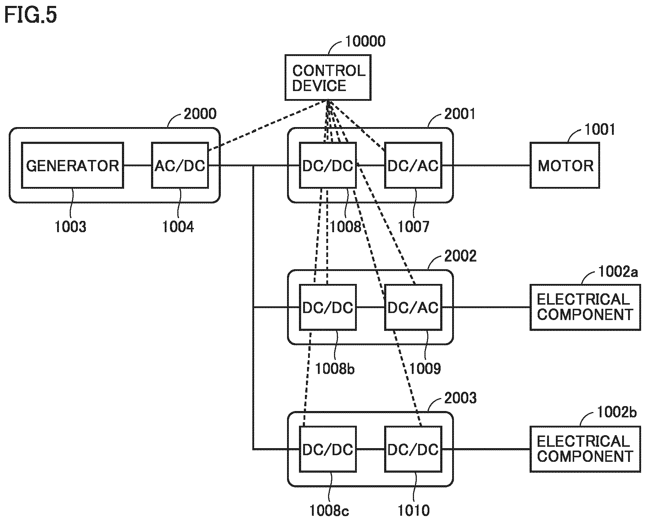

Fig. 5 is a schematic configuration diagram illustrating a fifth configuration example of the power system of the aircraft. The fifth configuration example of the power system further includes electrical component systems 2002 and 2003, and electrical components 1002a and 1002b added to the first configuration example illustrated in Fig. 1. Since electrical component systems 2002 and 2003, and electrical components 1002a and 1002b are the same as those illustrated in Figs. 3 and 4, the description thereof will be omitted.

In a combined system illustrated in Fig. 5, power source 2000 is shared as a power supply source to propulsion system 2001 and electrical component systems 2002 and 2003. Propulsion system 2001, and electrical component systems 2002 and 2003 convert the DC voltage to be supplied from power source 2000 into a voltage for driving a corresponding load (propulsion system motor 1001, or electrical components 1002a and 1002b), and supply the voltage to the load.

### (Sixth configuration example)

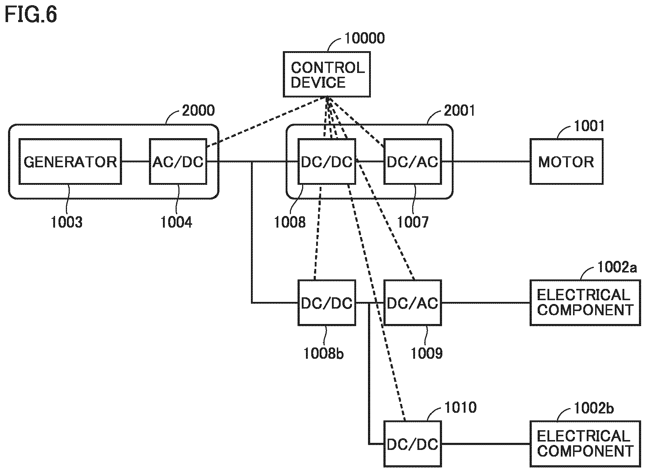

Fig. 6 is a schematic configuration diagram illustrating a sixth configuration example of the power system of the aircraft. The sixth configuration example of the power system further includes DC/DC converters 1008b and 1010, DC/AC converter 1009, and electrical components 1002a and 1002b added to the configuration example illustrated in Fig. 1. Since DC/DC converters 1008b and 1010, DC/AC converter 1009, and electrical components 1002a and 1002b are the same as those illustrated in Figs. 3 and 4, the description thereof will be omitted.

In a combined system illustrated in Fig. 6, a DC/DC converter is shared for adjusting the input voltages of DC/AC converter 1009 and DC/DC converter 1010 in the electrical component system.

Note that aircraft 1000 does not include all systems 2001 to 2003, and at least one of systems 2001 to 2003 can be appropriately selected depending on the load carried by aircraft 1000. In addition, a battery may be further connected to a DC bus that connects the power converters. In addition, a circuit breaker (CB) not illustrated is arranged in each of the systems and between the systems.

### <Configuration example of DC/DC converter>

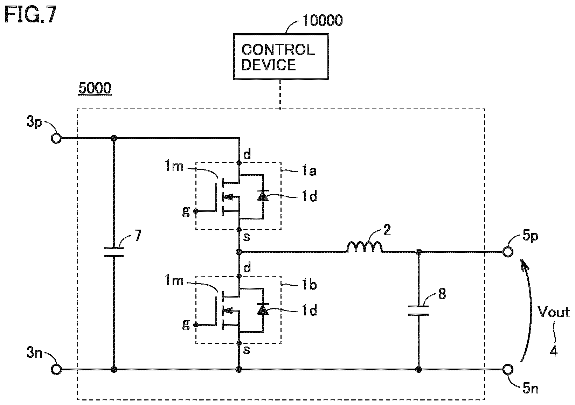

Next, a circuit configuration example of a DC/DC converter included in the power system described above will be described with reference to Figs. 7 to 11. Hereinafter, DC/DC converter 1008 of propulsion system 2001 will be described as an example.

Fig. 7 is a diagram illustrating a first circuit configuration example of DC/DC converter 1008. As illustrated in Fig. 7, DC/DC converter 1008 includes a non-insulated step-down chopper circuit 5000. Non-insulated step-down chopper circuit 5000 steps down a DC voltage input from an input positive bus 3p and an input negative bus 3n, and outputs the stepped-down DC voltage as an output voltage Vout to an output positive bus 5p and an output negative bus 5n.

Non-insulated step-down chopper circuit 5000 includes first semiconductor elements 1a and 1b as switching elements, a reactor 2, and smoothing capacitors 7 and 8.

First semiconductor elements 1a and 1b are connected in series between input positive bus 3p and input negative bus 3n. First semiconductor element 1a constitutes an upper arm, and first semiconductor element 1b constitutes a lower arm. First semiconductor elements 1a and 1b are collectively referred to as "first semiconductor element 1".

Reactor 2 is connected between a connection node of first semiconductor element 1a with first semiconductor element 1b and output positive bus 5p. Smoothing capacitor 7 is connected between input positive bus 3p and input negative bus 3n. Smoothing capacitor 8 is connected between output positive bus 5p and output positive bus 5n. Each of smoothing capacitors 7 and 8 smooths the DC voltage including a ripple voltage.

In non-insulated step-down chopper circuit 5000, step-down control on the input voltage is ideally executed by adjusting an impedance of reactor 2 and a switching duty ratio (a ratio between an on-period and an off-period) of first semiconductor element 1a (the upper arm). However, output voltage Vout may fluctuate due to influences of impedances of a wire, first semiconductor element 1, and the like, and a power converter, a load, or the like connected between output positive bus 5p and output negative bus 5n. Therefore, output voltage Vout, a current flowing through reactor 2, an inter-terminal voltage and a temperature of first semiconductor element 1, and the like are detected by a sensor (not illustrated), and detection values thereof are provided to control device 10000 as sensor information. Control device 10000 causes the sensor information to be fed back to control of a switching operation of first semiconductor element 1a.

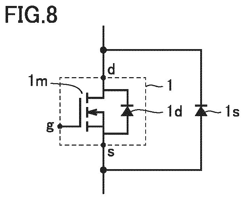

Fig. 8 is a diagram illustrating a configuration example of first semiconductor element 1 included in DC/DC converter 1008 illustrated in Fig. 7. As illustrated in Fig. 8, first semiconductor element 1 includes a metal oxide semiconductor field effect transistor (MOSFET) 1m as the switching element and a diode 1d. Diode 1d is a freewheeling diode (FWD), and is connected in anti-parallel with the switching element. In a case where the switching element is the MOSFET, diode 1d can include a parasitic diode (a body diode) of the MOSFET.

In a case where a large current flows through each of the arms of non-insulated step-down chopper circuit 5000, it is common to connect the plurality of first semiconductor elements 1 in parallel to configure the each of the arms and divide the current. In addition, even in a case where the large current does not flow through the each of the arms, the plurality of first semiconductor elements 1 may be connected in parallel to reduce conduction loss of first semiconductor elements 1.

Note that since the MOSFET has the parasitic diode, it is not necessary to separately connect the freewheeling diode to the MOFET in anti-parallel. However, as illustrated in Fig. 8, a diode 1s may be connected to first semiconductor element 1 in anti-parallel. In addition, diode 1s may be one or more.

In a case where non-insulated step-down chopper circuit 5000 does not perform a bidirectional voltage conversion operation, first semiconductor element 1b (the lower arm) performs only rectification, and thus a switching function becomes unnecessary. Therefore, first semiconductor element 1b may include only the diode.

As described above, in a case where the plurality of first semiconductor elements 1 are connected in parallel to constitute the each of the arms, non-insulated step-down chopper circuit 5000 may be configured by using a power semiconductor module on which the plurality of first semiconductor elements 1 are mounted in one package.

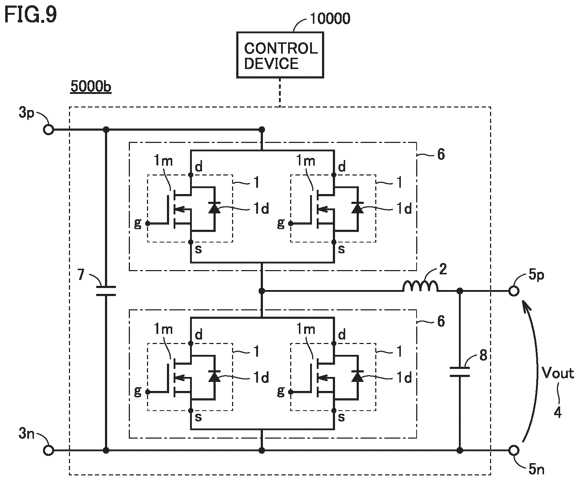

Fig. 9 is a diagram illustrating a second circuit configuration example of DC/DC converter 1008. As illustrated in Fig. 9, DC/DC converter 1008 includes a non-insulated step-down chopper circuit 5000b. Non-insulated step-down chopper circuit 5000b is different from non-insulated step-down chopper circuit 5000 illustrated in Fig. 7 in that each of the upper arm and the lower arm includes the plurality of first semiconductor elements 1 connected in parallel.

In the example of Fig. 9, the each of the upper arm and the lower arm includes a first power semiconductor module 6 having two first semiconductor elements 1 connected in parallel. Note that the number of first semiconductor elements 1 included in first power semiconductor module 6 may be greater than or equal to three.

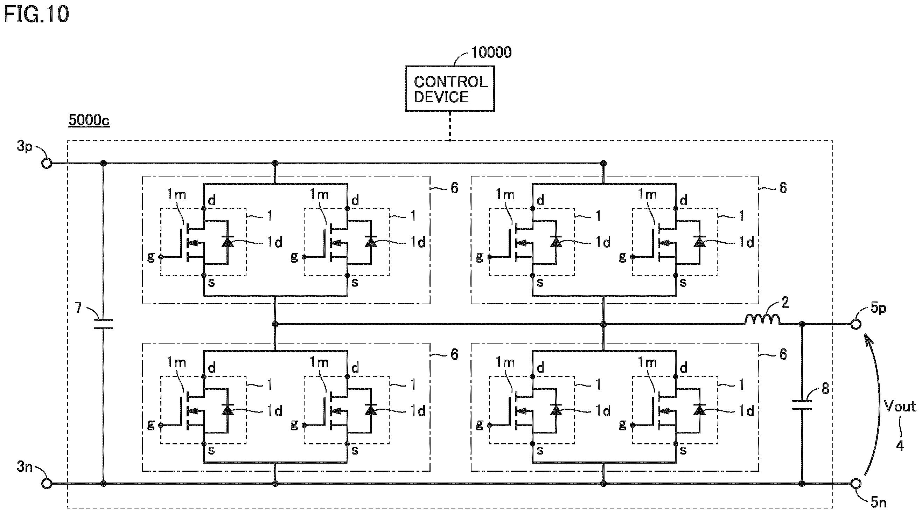

Fig. 10 is a diagram illustrating a third circuit configuration example of DC/DC converter 1008. As illustrated in Fig. 10, DC/DC converter 1008 includes a non-insulated step-down chopper circuit 5000c. Non-insulated step-down chopper circuit 5000c is different from non-insulated step-down chopper circuit 5000 illustrated in Fig. 7 in that the each of the upper arm and the lower arm includes a plurality of first power semiconductor modules 6 connected in parallel.

In the example of Fig. 10, the each of the upper arm and the lower arm includes two first power semiconductor modules 6 connected in parallel. Each of first power semiconductor modules 6 includes the two first semiconductor elements 1 connected in parallel. Note that both the number of first power semiconductor modules 6 included in the each of the arms and the number of first semiconductor elements 1 included in the each of first power semiconductor modules 6 may be greater than or equal to three.

Note that although Figs. 7, 9, and 10 illustrate a circuit configuration example of a non-insulated step-down chopper circuit having a half bridge circuit, DC/DC conversion circuit 1008 may include a non-insulated chopper circuit having a full bridge circuit. In addition, in place of the non-insulated step-down chopper circuit, an isolated step-down chopper circuit using a transformer or a capacitor may be adopted.

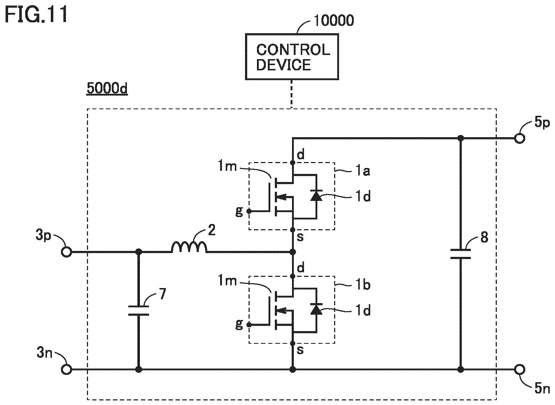

In addition, in Figs. 7, 9, and 10, the non-insulated step-down chopper circuit is exemplified as DC/DC conversion circuit 1008 being a step-down circuit. However, in a case where DC/DC conversion circuit 1008 is a step-up circuit, a non-insulated step-up chopper circuit as illustrated in Fig. 11 can be adopted.

Fig. 11 is a diagram illustrating a fourth circuit configuration example of DC/DC converter 1008. As illustrated in Fig. 11, DC/DC converter 1008 includes a non-insulated step-up chopper circuit 5000d. Non-insulated step-up chopper circuit 5000d is different from non-insulated step-down chopper circuit 5000 illustrated in Fig. 7 in that reactor 2 is connected between input positive bus 3p and the connection node of first semiconductor element 1a with first semiconductor element 1b.

In non-insulated step-up chopper circuit 5000d, step-up control on the input voltage is ideally executed by adjusting the impedance of reactor 2 and a switching duty ratio of first semiconductor element 1b (the lower arm). However, since the output voltage fluctuates similarly to non-insulated step-down chopper circuit 5000, control device 10000 causes the sensor information to be fed back to control of a switching operation of first semiconductor element 1b.

### <Configuration example of DC/AC converter>

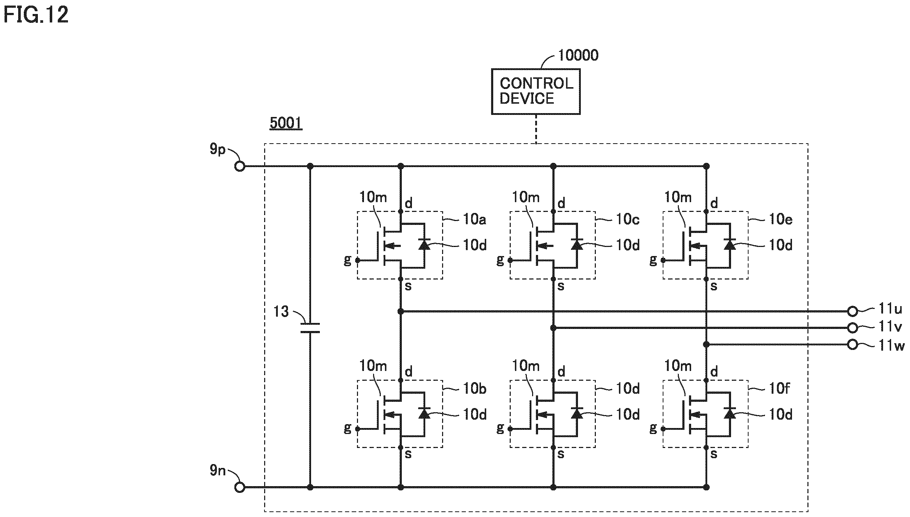

Next, a circuit configuration example of a DC/AC converter included in the power system described above will be described with reference to Figs. 12 to 15. Hereinafter, DC/AC converter 1007 of propulsion system 2001 will be described as an example.

Fig. 12 is a diagram illustrating a first circuit configuration example of DC/AC converter 1007. As illustrated in Fig. 12, DC/AC converter 1007 includes a three-phase two-level inverter circuit 5001. Three-phase two-level inverter circuit 5001 converts DC voltages input from an input positive bus 9p and an input negative bus 9n into three-phase (U-phase, V-phase, W-phase) AC voltages, and outputs the three-phase AC voltages to AC output terminals 1 1u, 1 1v, and 1 1w.

Three-phase two-level inverter circuit 5001 includes second semiconductor elements 10a to 10f as switching elements and a smoothing capacitor 13.

Second semiconductor elements 10a and 10b are connected in series between input positive bus 9p and input negative bus 9n. A connection node of second semiconductor element 10a with second semiconductor element 10b is connected to U-phase output terminal 1 1u. Second semiconductor elements 10c and 10d are connected in series between input positive bus 9p and input negative bus 9n. A connection node of second semiconductor element 10c with second semiconductor element 10d is connected to V-phase output terminal 11v. Second semiconductor elements 10e and 10f are connected in series between input positive bus 9p and input negative bus 9n. A connection node of second semiconductor element 10e with second semiconductor element 10f is connected to W-phase output terminal 11w. Second semiconductor elements 10a and 10b constitute a U-phase leg, second semiconductor elements 10c and 10d constitute a V-phase leg, and second semiconductor elements 10e and 10f constitute a W-phase leg. Second semiconductor elements 10a to 10f are collectively referred to as "second semiconductor elements 10".

Smoothing capacitor 13 is connected between input positive bus 9p and input negative bus 9n, and smooths the DC voltage including the ripple voltage.

Three-phase two-level inverter circuit 5001 is equipped with a sensor (not illustrated) for detecting a current flowing through U-phase output terminal 11u, V-phase output terminal 1 1v, and W-phase output terminal 11w, a voltage across U-phase output terminal 11u, V-phase output terminal 1 1v, and W-phase output terminal 11w, and an inter-terminal voltage and a temperature of each of second semiconductor elements 10. Detection values thereof from the sensor are given to control device 10000 as the sensor information. Control device 10000 causes the sensor information to be fed back to control of a switching operation of the each of second semiconductor elements 10.

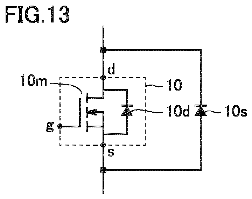

Fig. 13 is a diagram illustrating a configuration example of second semiconductor element 10 included in DC/AC converter 1007 illustrated in Fig. 12. As illustrated in Fig. 13, second semiconductor element 10 includes a MOSFET 10m as the switching element and a diode 10d. Diode 10d is the freewheeling diode and is connected in anti-parallel with the switching element. In the case where the switching element is the MOSFET, diode 10d can include the parasitic diode of the MOSFET.

In a case where a large current flows through the each of the arms of a respective leg of three-phase two-level inverter circuit 5001, it is common to connect a plurality of second semiconductor elements 10 in parallel to configure the each of the arms, and divide the current. In addition, even in the case where the large current does not flow through the each of the arms, the plurality of second semiconductor elements 10 may be connected in parallel to reduce conduction loss of second semiconductor elements 10.

Note that since the MOSFET has the parasitic diode, it is not necessary to separately connect the freewheeling diode to the MOFET in anti-parallel. However, as illustrated in Fig. 13, a diode 10s may be connected to second semiconductor element 10 in anti-parallel. In addition, diode 10s may be one or more.

Similarly to non-insulated step-down chopper circuit 5000 described above, in a case where the plurality of second semiconductor elements 10 are connected in parallel to configure the each of the arms, three-phase two-level inverter circuit 5001 may be configured by using the power semiconductor module on which the plurality of second semiconductor elements 10 are mounted in one package.

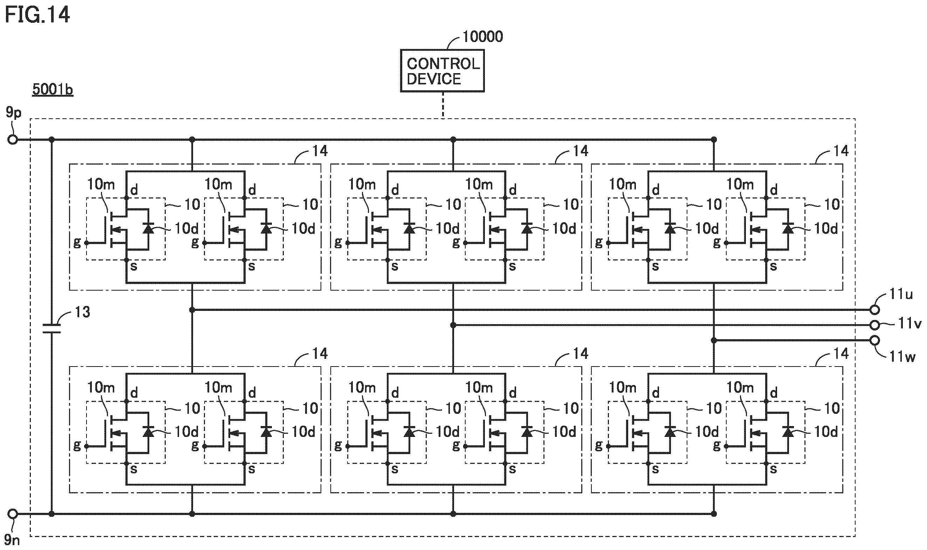

Fig. 14 is a diagram illustrating a second circuit configuration example of DC/AC converter 1007. As illustrated in Fig. 14, DC/AC converter 1007 includes a three-phase two-level inverter circuit 5001b. Three-phase two-level inverter circuit 5001b is different from three-phase two-level inverter circuit 5001 illustrated in Fig. 12 in that the each of the upper arm and the lower arm includes the plurality of second semiconductor elements 10 connected in parallel.

In the example of Fig. 14, the each of the upper arm and the lower arm includes a second power semiconductor module 14 having two second semiconductor elements 10 connected in parallel. Note that the number of second semiconductor elements 10 included in second power semiconductor module 14 may be greater than or equal to three.

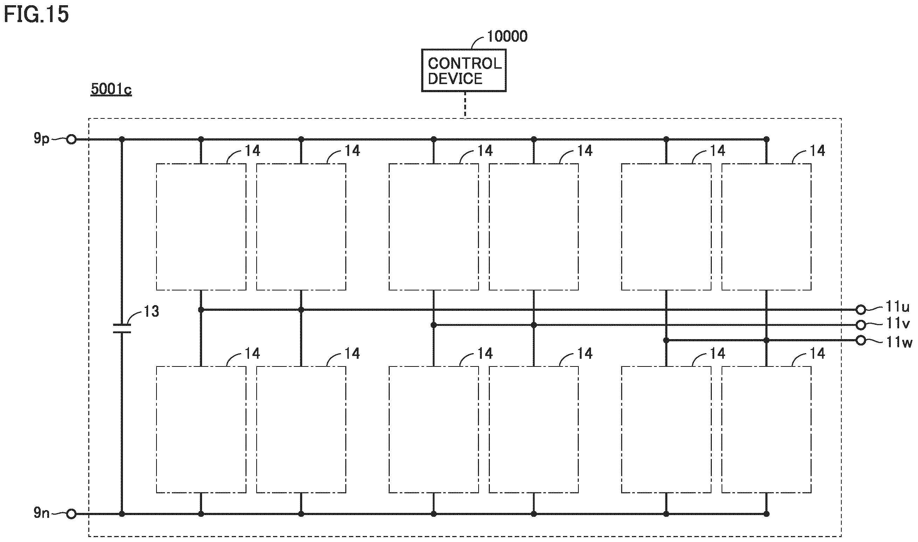

Fig. 15 is a diagram illustrating a third circuit configuration example of DC/AC converter 1007. As illustrated in Fig. 15, DC/AC converter 1007 includes a three-phase two-level inverter circuit 5001c. Three-phase two-level inverter circuit 5001c is different from three-phase two-level inverter circuit 5001 illustrated in Fig. 12 in that the each of the upper arm and the lower arm includes the plurality of second power semiconductor modules 14 connected in parallel.

In the example of Fig. 15, the each of the upper arm and the lower arm includes two second power semiconductor modules 14 connected in parallel. Although not illustrated, each of second power semiconductor modules 14 includes the plurality of second semiconductor elements 10 connected in parallel. Note that the number of second power semiconductor modules 14 included in the each of the arms may greater than or equal to 3.

Note that three-phase two-level inverter circuits 5001, 5001b, and 5001c may be configured by using discrete semiconductor elements. In addition, DC/AC converter 1007 is only required to have a DC/AC conversion function, and is not limited to the three-phase two-level inverter circuit. DC/AC converter 1007 may be a multi-level circuit, for example, a three-phase three-level inverter circuit, a three-phase five-level inverter circuit, a three-phase gradation inverter circuit, or the like.

Here, although the circuit configuration examples of the power converters included in the power system has been described above with DC/DC converter 1008 and DC/AC converter 1007 as examples, DC/DC converters 1008b, 1008c, and 1010 can have a circuit configuration similar to that of DC/DC converter 1008. In addition, DC/AC converter 1009 can have a circuit configuration similar to that of DC/AC converter 1007. However, a rated voltage, a rated current, and the like of the each of the semiconductor elements constituting a respective power converter are different depending on a capacity of the load.

In addition, in each of semiconductor elements 1 and 10, a configuration example in which the MOSFET is adopted as the switching element, the parasitic diode of the MOSFET is used as the freewheeling diode, or the freewheeling diode is connected in anti-parallel to the switching element has been described. However, a silicon (Si)-MOSFET, a silicon carbide (SiC)-MOSFET, a Si-insulated gate bipolar transistor (Si-IGBT), a SiC-IGBT, a GaN-high electron mobility transistor (GaN-HEMT), or the like can be used as the switching element. In addition, a Si-diode, a SiC-diode, a SiC-Schottky barrier diode (SiC-SBD), or the like can be used as the freewheeling diode. Note that in a case where the IGBT is used as the switching element, it is always necessary to connect the freewheeling diode in anti-parallel to the switching element. However, in a case where the RC-IGBT is used as the switching element, it is not necessary to connect the freewheeling diode to the switching element. Moreover, it is also possible to use a high withstand voltage semiconductor element using gallium oxide (GaO) or diamond.

### <Configuration example of power semiconductor module>

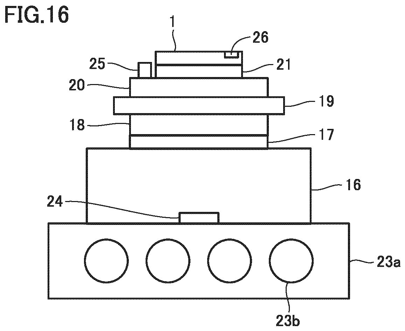

Next, a configuration example of power semiconductor modules 6 and 14 will be described with reference to Fig. 16. Hereinafter, first power semiconductor module 6 will be described as an example.

Fig. 16 is a schematic configuration diagram of first power semiconductor module 6. As illustrated in Fig. 16, first power semiconductor module 6 includes first semiconductor element 1, bonding materials 17 and 21, a front electrode 20, an insulating material 19, a back electrode 18, a base plate 16, and a water-cooling device 23a.

First semiconductor element 1 is bonded to front electrode 20 with bonding material 21. Bonding materials 17 and 21 are, for example, a paste made of silver (Ag) or copper (Cu), a solder, or the like. Front electrode 20 and back electrode 18 are made of Cu, aluminum (Al), or the like. Front electrode 20 and back electrode 18 are attached to insulating material 19 with a brazing material or the like. Insulating material 19 is made of silicon nitride (Si₃N₄), alumina (Al₂O₃), aluminum nitride (AlN), a resin material, or the like.

Back electrode 18 is bonded to base plate 16 with bonding material 21. Base plate 16 is made of aluminum-silicon carbide (Al-SiC), magnesium-silicon carbide Mg-SiC), Al, Cu, an Al alloy, a Cu alloy, or the like. Base plate 16 is bonded to water-cooling device 23a by a screw, caulking, or the like. Water-cooling device 23a is formed with a cooling pipe 23b.

Note that in the example of Fig. 16, water-cooling device 23a is exemplified as a cooling device, but an air-cooling device including fins may be used. In addition, grease or a heat spreader for diffusing heat radiation may be interposed between base plate 16 and water-cooling device 23a.

In addition, the configuration of the power semiconductor module is not limited to the example of Fig. 16, and a configuration in which base plate 16 is directly bonded to water-cooling device 23a, a configuration in which cooling is performed from both surfaces of first semiconductor element 1, or the like can be adopted.

### <Accidental failure of semiconductor element>

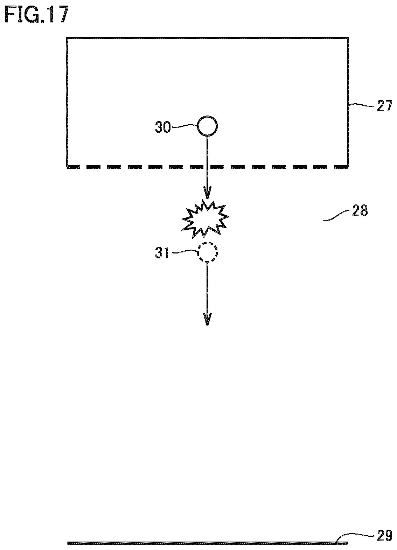

Next, the accidental failure of the semiconductor element will be described with reference to Fig. 17. Hereinafter, an accidental failure of second semiconductor element 10 will be representatively described.

Fig. 17 is a diagram illustrating a mechanism for generating neutrons that may cause the accidental failure of the semiconductor element.

As illustrated in Fig. 17, cosmic rays 30 exist in a space 27 and constantly falls on the earth. When entering an atmosphere 28 of the earth, cosmic rays 30 collide with the atmosphere to generate neutrons 31. Neutrons 31 may collide with second semiconductor element 10 mounted on the aircraft operating on a ground surface 29 or flying in the sky. In a case where a high voltage is applied to second semiconductor element 10, second semiconductor element 10 may fail due to the collision with neutrons 31. Such phenomenon is called single event burnout (SEB).

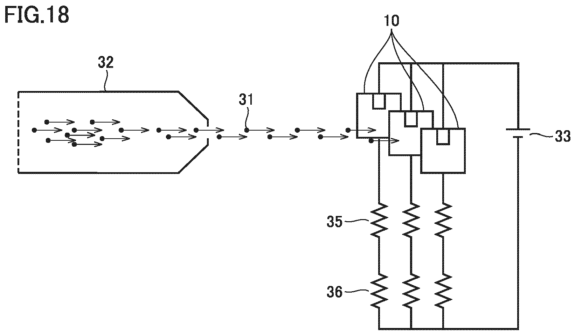

A failure rate of the semiconductor element due to the SEB can be experimentally obtained. Fig. 18 is a diagram illustrating an experimental example of the failure rate of the semiconductor element. As illustrated in Fig. 18, the plurality of (for example, three) second semiconductor elements 10 are connected in parallel between a positive electrode and a negative electrode of a DC power source 33. A voltage-dividing resistor 35 and a leakage-measuring resistor 36 are connected in series with the each of second semiconductor elements 10 between the positive electrode and the negative electrode of DC power source 33.

In a case where the each of second semiconductor elements 10 includes the MOSFET, DC power source 33 is electrically connected between a drain and a source of the MOSFET. By short-circuiting a gate and the source of the MOSFET or applying a negative bias between the gate and the source, the drain and the source of the MOSFET are kept in a high resistance state.

At this time, a DC voltage of DC power source 33 is divided by second semiconductor elements 10, voltage-dividing resistor 35, and resistor 36. A drain-source resistance of the each of second semiconductor element 10, voltage-dividing resistor 35, and resistor 36 has a relationship in which a resistance value of resistor 36 is sufficiently smaller than a resistance value of voltage-dividing resistor 35, and the resistance value of voltage-dividing resistor 35 is sufficiently smaller than a resistance value of the drain-source resistance of the each of second semiconductor elements 10. Therefore, most of the DC voltage of DC power source 33 is applied to second semiconductor element 10. On the other hand, in a case where the each of second semiconductor elements 10 fails and the resistance value of the drain-source resistance decreases, the most of the DC voltage of DC power source 33 is applied to voltage-dividing resistor 35.

An inter-terminal voltage of resistor 36 is detected by a data logger (not illustrated). A leakage current can be calculated from a detection value of the inter-terminal voltage of resistor 36 and the resistance value of resistor 36. In a case where second semiconductor elements 10 are normal, the leakage current is small, and the leakage current increases due to the failures of second semiconductor elements 10.

In an experiment, second semiconductor elements 10 are irradiated with neutrons 31 from an accelerator 32 in a state where the DC voltage is applied to second semiconductor elements 10 from DC power source 33. When neutrons 31 collide with second semiconductor elements 10, the SEB stochastically occurs, and second semiconductor elements 10 fail.

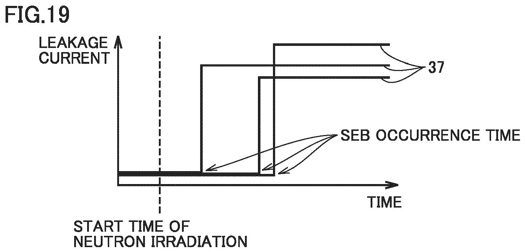

Fig. 19 is a diagram illustrating variation of leakage current during irradiation with neutrons 31. Fig. 19 illustrates waveforms 37 of three leakage currents. Three waveforms 37 represent the leakage current flowing through each of three second semiconductor elements 10 illustrated in Fig. 18.

As illustrated in Fig. 19, in a state where the DC voltage is applied to the each of second semiconductor elements 10, a leakage current at a start time of neutron irradiation is small. If the each of second semiconductor element 10 is continuously irradiated with the neutrons, the SEB occurs in the each of second semiconductor elements 10. Since the SEB occurs accidentally, SEB occurrence times are different among the three second semiconductor elements 10.

A failure rate of the each of second semiconductor elements 10 can be calculated from a total number of second semiconductor elements 10 used in the experiment, a time at which the each of second semiconductor elements 10 fails, and the number of second semiconductor elements 10 failed. Note that the failure rate is generally calculated by using an index called the "Failure-in-Time (FIT)". The FIT is a unit representing the failure rate, and represents the number of the second semiconductor elements failing within the ninth power of ten hours. For example, "1 FIT" means a probability that one failure occurs within the ninth power of ten hours. A lower FIT indicates a lower failure rate.

In the experiment illustrated in Fig. 18, the number of the neutrons with which the irradiation is performed per unit time and per unit area is larger than the number of the neutrons actually falling on the natural world per unit time and per unit area. Therefore, the experiment is substantially an accelerated test. Accordingly, the FIT under an environment in which second semiconductor elements 10 are placed is corrected by using the number of the neutrons per unit time and per unit area under the environment.

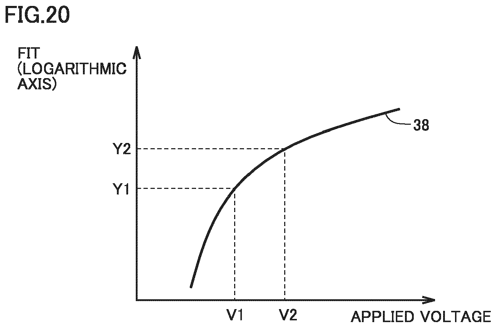

The FIT of one second semiconductor element 10 increases as the voltage applied to second semiconductor element 10 increases. Fig. 20 is a diagram illustrating a relationship between a voltage applied to second semiconductor element 10 and a FIT of one second semiconductor element 10. In Fig. 20, a horizontal axis represents an applied voltage, and a vertical axis represents the FIT.

Fig. 20 illustrates a FIT curve 38 of second semiconductor element 10. According to FIT curve 38, the FIT when a voltage V1 is applied is Y1, and the FIT when a voltage V2 is applied is Y2. If V1 < V2, then Y1 < Y2. Accordingly, it can be seen that the FIT of second semiconductor element 10 can be controlled by adjusting the voltage applied to second semiconductor element 10.

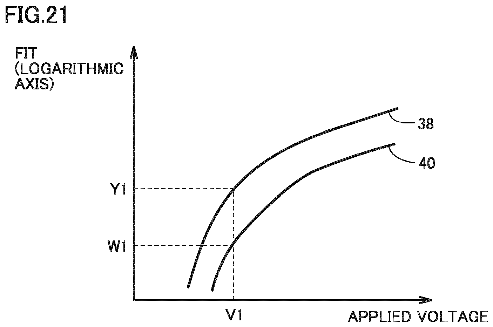

Note that the FIT is correlated with the withstand voltage of the semiconductor element, and it is known that the FIT decreases as the withstand voltage of the semiconductor element increases. Fig. 21 is a diagram illustrating the correlation between a withstand voltage and the FIT of the semiconductor element. Fig. 21 illustrates first FIT curve 38 indicating the relationship between the applied voltage and the FIT of second semiconductor element 10, and a second FIT curve 40 indicating a relationship between an applied voltage and a FIT of a high withstand-voltage semiconductor element 39 having a higher withstand voltage than second semiconductor element 10.

Comparing first FIT curve 38 with second FIT curve 40, the FIT of second semiconductor element 10 becomes Y1 when voltage V1 is applied, whereas the FIT of high withstand-voltage semiconductor element 39 becomes W1 lower than Y1. Note that the correlation between the withstand voltage and the FIT of the semiconductor element illustrated in Fig. 21 remains unchanged regardless of a height at which the semiconductor element is placed.

Note that it is assumed that second semiconductor element 10 and high withstand-voltage semiconductor element 39 in Fig. 21 are both the MOSFETs and have an equal element area. A difference between second semiconductor element 10 and high withstand-voltage semiconductor element 39 is only a thickness or a concentration of a drift layer that holds the withstand voltage of the MOSFET.

In a case where an element structure is greatly different among a plurality of MOSFETs having different withstand voltages, electric field distribution inside the MOSFETs may be greatly different. As a result, first FIT curve 38 and second FIT curve 40 may intersect or a vertical relationship may be reversed. For example, in a case where semiconductor materials are different between second semiconductor element 10 and high withstand-voltage semiconductor element 39, first FIT curve 38 and second FIT curve 40 may intersect or the vertical relationship may be reversed. Assuming these cases, the relationship between the applied voltage and the FIT of the semiconductor element should be confirmed by acquiring the FIT curves by performing the experiment described above (see Fig. 19) for the each of the semiconductor elements.

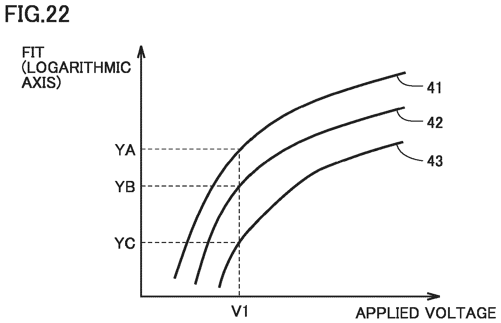

In addition, the FIT is also correlated with the temperature (the junction temperature) of the semiconductor element, and the FIT tends to decrease as the junction temperature increases. Fig. 22 is a diagram illustrating a correlation between a junction temperature and the FIT of second semiconductor element 10. Fig. 22 illustrates FIT curves 41 to 43 indicating a relationship between the junction temperature and the FIT of second semiconductor element 10. A third FIT curve 41 is a FIT curve when the junction temperature is A [°C]. A fourth FIT curve 42 is a FIT curve when the junction temperature is B [°C]. A fifth FIT curve 43 is a FIT curve when the junction temperature is C [°C]. Note that A [°C] < B [°C] < C [°C].

According to Fig. 21, in a case where voltage V1 is applied to second semiconductor element 10, the FIT is YA when the junction temperature is A [°C], the FIT is YB when the junction temperature is B [°C], and the FIT is YC when the junction temperature is C [°C]. Note that YC < YB < YA.

In general, the withstand voltage increases as the junction temperature of the semiconductor element increases, and the withstand voltage decreases as the junction temperature decreases. Therefore, in Fig. 22, the withstand voltage increases as the junction temperature increases, and thus the FIT decreases. On the contrary, the withstand voltage decreases as the junction temperature decreases, and thus the FIT increases.

The correlation between the junction temperature and the FIT of the semiconductor element remains unchanged regardless of a height of a place where the semiconductor element is located. However, since the correlation between the junction temperature and the FIT is not necessarily proportional, the relationship between the applied voltage and the FIT of the each of the semiconductor elements should be confirmed by changing the junction temperature and acquiring the FIT curve depending on the junction temperature for the each of the semiconductor elements in the experiment described above (see Fig. 19).

Next, FITs of second power semiconductor module 14 and three-phase two-level inverter circuit 5001 on which the above second semiconductor element 10 is mounted will be described.

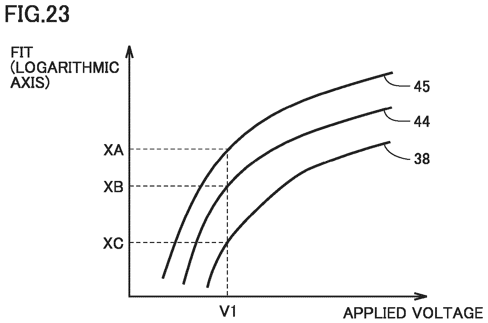

Fig. 23 is a diagram illustrating a FIT of each of second semiconductor element 10, second power semiconductor module 14, and three-phase two-level inverter circuit 5001. In Fig. 23, first FIT curve 38 is a FIT curve of one second semiconductor element 10. A sixth FIT curve 44 is a FIT curve of one second power semiconductor module 14. A seventh FIT curve 45 is a FIT curve of one three-phase two-level inverter circuit 5001.

The FIT of second power semiconductor module 14 on which the plurality of second semiconductor elements 10 are mounted increases in proportion to the number of second semiconductor elements 10 mounted. Specifically, sixth FIT curve 44 of one second power semiconductor module 14 is calculated by the following expression (1) with first FIT curve 38 of one second semiconductor element 10. Sixth FIT curve 44 = first FIT curve 38 × number of second semiconductor elements 10 mounted

However, in expression (1), both sixth FIT curve 44 and first FIT curve 38 are FIT curves at the height of 0 m above sea level.

The FIT of three-phase two-level inverter circuit 5001 including the plurality of second power semiconductor modules 14 increases in proportion to the number of second power semiconductor modules 14 mounted. Specifically, seventh FIT curve 45 of one three-phase two-level inverter circuit 5001 is calculated by the following expression (2) with sixth FIT curve 44 of one second power semiconductor module 14. Seventh FIT curve 45 = sixth FIT curve 44 × number of second power semiconductor modules 14 mounted

However, in expression (2), both seventh FIT curve 45 and sixth FIT curve 44 are the FIT curves at the height of 0 m above sea level.

According to the above expressions (1) and (2), first FIT curve 38, sixth FIT curve 44, and seventh FIT curve 45 have a relationship as illustrated in Fig. 23. For example, in a case where voltage V1 is applied to each of buses of second semiconductor element 10, second power semiconductor module 14, and three-phase two-level inverter circuit 5001, the FIT of second semiconductor element 10 of XC, the FIT of second power semiconductor module 14 of XB, and the FIT of three-phase two-level inverter circuit 5001 of XA has a relationship of XC < XB < XA.

Note that the correlation between the number and the FIT of second semiconductor elements 10 mounted on second power semiconductor module 14, and the correlation between the number and the FIT of second power semiconductor modules 14 mounted on three-phase two-level inverter circuit 5001 both remain unchanged regardless of the height.

In the calculation of the FIT described above, an example has been shown in which seventh FIT curve 45 of three-phase two-level inverter circuit 5001 is calculated on the basis of first FIT curve 38 of one second semiconductor element 10. However, the FIT of each of DC/DC converters 1008, 1008b, 1008c and 1010, and DC/AC converters 1007 and 1009 can be calculated by using the FIT curves of the semiconductor elements mounted on the power converter.

### <Dependency of neutrons on height, latitude and longitude>

Next, dependency of the neutrons on the height, the latitude, and the longitude will be described.

The number of the neutrons per unit time and unit area [number/(time or area)] varies depending on the height, the latitude, and the longitude of the place where the neutrons are located. In the following description, the number of the neutrons per unit time and unit area is also simply referred to as "number of the neutrons". The number of the neutrons corresponds to the amount of the neutrons.

Spectra of the neutrons depending on the height, the latitude, and the longitude can be calculated by using, for example, an EXPACS (excel-based program for calculating atomic cosmic-ray spectrum). The EXPACS refers to a program capable of calculating a cosmic ray flux and energy thereof at any place and time in the atmosphere. The spectra of the neutrons refer to data representing the number of the neutrons present for a wide energy band of the neutrons per unit time and unit area. From the spectra of the neutrons obtained by the EXPACS, it is possible to acquire data indicating the dependency of the number of the neutrons having any energy on the height, the latitude, and the longitude.

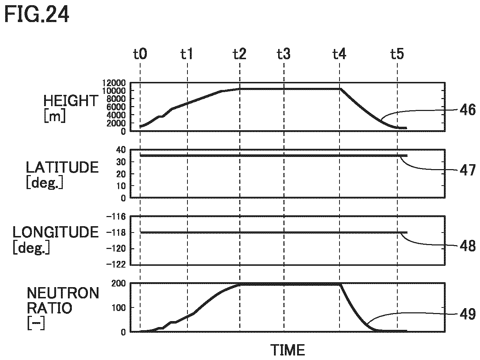

Fig. 24 is a diagram illustrating a first example of a neutron ratio 49 calculated on the basis of height data 46, latitude data 47, and longitude data 48 when the aircraft flies on an optional date. In the present description, the "neutron ratio" means a ratio of the number of the neutrons per unit time and unit area calculated from the height, the latitude, and the longitude to the number of the neutrons per unit time and unit area at the place of 0 m above sea level on arbitrary coordinates.

In Fig. 24, a time t0 indicates a time before takeoff of the aircraft, a time t1 indicates a time when the height increases, a time t2 indicates a time when the height reaches a maximum height, a time t3 indicates a time when the aircraft is flying at the maximum height, a time t4 indicates a time before the height decreases, and a time t5 indicates a time after landing. During a period from before the takeoff (the time t0) to after the landing (the time t5) of the aircraft, height data 46 indicating a height of the aircraft varies in a range of 0 to 12000 [m]. On the other hand, each of latitude data 47 indicating a latitude of the aircraft and longitude data 48 indicating a longitude of the aircraft is constant.

Neutron ratio 49 is calculated on the basis of the number of the neutrons calculated from height data 46, latitude data 47, and longitude data 48 at each of the times. It can be seen from Fig. 24 that neutron ratio 49 varies within a range of 0 to 200 following the variation of height data 46. Note that as the number of the neutrons increases, neutron ratio 49 increases. Accordingly, neutron ratio 49 varies greatly depending on the height of the aircraft.

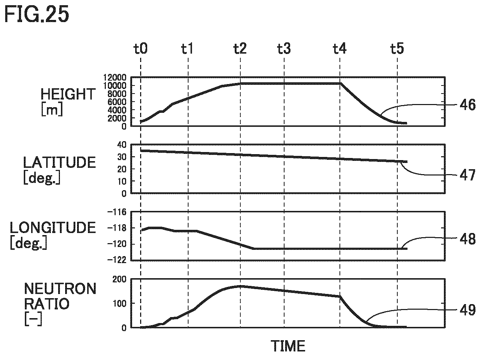

Fig. 25 is a diagram illustrating a second example of neutron ratio 49 calculated on the basis of height data 46, latitude data 47, and longitude data 48 when the aircraft flies on the optional date. The second example illustrated in Fig. 25 is different from the first example illustrated in Fig. 24 in that latitude data 47 and longitude data 48 vary in addition to height data 46.

It can be seen that neutron ratio 49 varies within a range of 0 to 200 following not only the variation of height data 46, but also the variations of latitude data 47 and longitude data 48. Accordingly, neutron ratio 49 greatly varies depending on the height, the latitude, and the longitude of the aircraft.

Neutron ratio 49 is directly linked to the failure rate of the each of the semiconductor elements. Hereinafter, a relationship between neutron ratio 49 and the failure rate will be described by taking three-phase two-level inverter circuit 5001 as an example.

Expression (2) indicating seventh FIT curve 45 of three-phase two-level inverter circuit 5001 can be transformed as in Expression (3) in consideration of neutron ratio 49. Seventh FIT curve 45 = sixth FIT curve 44 × number of second power semiconductor modules 14 mounted x neutron ratio 49

However, in expression (3), sixth FIT curve 44 is the FIT curve at the height of 0 m above sea level.

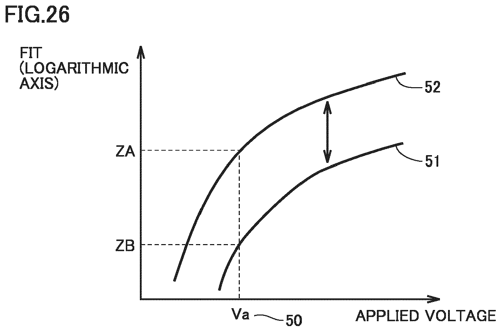

Fig. 26 is a diagram illustrating a correlation between the FIT of three-phase two-level inverter circuit 5001 and neutron ratio 49. In Fig. 26, an eighth FIT curve 51 is a FIT curve of one three-phase two-level inverter circuit 5001 when neutron ratio 49 is a first value. A ninth FIT curve 52 is a FIT curve of one three-phase two-level inverter circuit 5001 when neutron ratio 49 is a second value larger than the first value.

According to Fig. 26, in a case where an input voltage 50 to three-phase two-level inverter circuit 5001 is Va, the FIT is ZA when neutron ratio 49 is the second value, and the FIT is ZB when neutron ratio 49 is the first value. Note that ZB < ZA. In other words, in case where the input voltages are equal, the FIT of three-phase two-level inverter circuit 5001 increases as neutron ratio 49 increases.

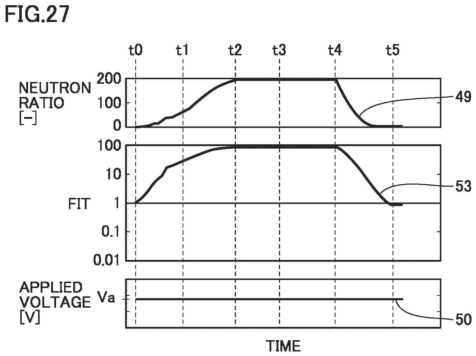

Fig. 27 is a diagram illustrating a first example of neutron ratio 49 when the aircraft flies on the optional date, and first FIT data 53 and input voltage 50 of three-phase two-level inverter circuit 5001. Note that neutron ratio 49 illustrated in Fig. 27 is calculated on the basis of height data 46, latitude data 47, and longitude data 48 illustrated in Fig. 25. First FIT data 53 is calculated by using neutron ratio 49 and expression (3).

In Fig. 27, input voltage 50 to three-phase two-level inverter circuit 5001 indicates a voltage applied between input positive bus 9p and input negative bus 9n of three-phase two-level inverter circuit 5001, and is maintained at a constant voltage Va.

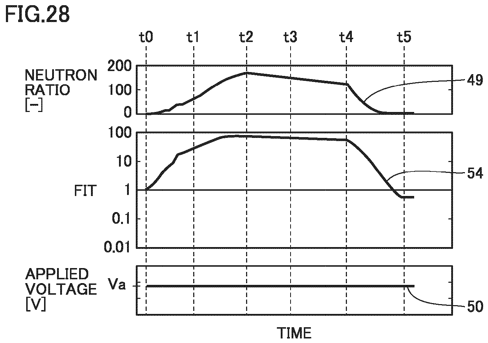

Fig. 28 is a diagram illustrating a second example of neutron ratio 49 when the aircraft flies on the optional date, and second FIT data 54 and input voltage 50 of three-phase two-level inverter circuit 5001. Note that neutron ratio 49 illustrated in Fig. 28 is calculated on the basis of height data 46, latitude data 47, and longitude data 48 illustrated in Fig. 26. Second FIT data 54 is calculated by using neutron ratio 49 and expression (3).

In Fig. 28, input voltage 50 to three-phase two-level inverter circuit 5001 indicates a voltage applied between input positive bus 9p and input negative bus 9n of three-phase two-level inverter circuit 5001, and is maintained at the constant voltage Va.

From Figs. 27 and 28, it can be seen that if neutron ratio 49 varies under input voltage 50 being the constant voltage Va, first FIT data 53 and second FIT data 54 also vary following the variation of neutron ratio 49. The FIT increases as neutron ratio 49 increases, and the FIT decreases as neutron ratio 49 decreases.

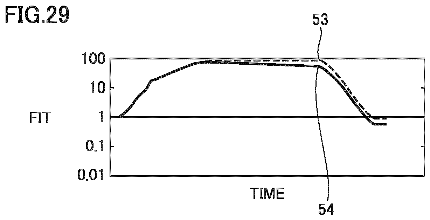

Fig. 29 is a diagram illustrating comparison between first FIT data 53 and second FIT data 54. As illustrated in Fig. 29, the variation of the FIT of three-phase two-level inverter circuit 5001 can be obtained more accurately in a case where height data 46, latitude data 47, and longitude data 48 are considered, as opposed to a case where only height data 46 is considered.

Here, it is assumed that a safety design value of three-phase two-level inverter circuit 5001 is set to less than or equal to 1 FIT. In a case where input voltage 50 is the constant voltage Va, both first FIT data 53 and second FIT data 54 are less than or equal to 1 FIT at time t0 and time t5, but transition to a higher value than 1 FIT while the aircraft is in flight. This indicates that three-phase two-level inverter circuit 5001 does not satisfy the safety design value, and has a low reliability against the SEB.

Therefore, in the present embodiment, in a case where a route of the aircraft is known in advance, neutron ratio 49 is calculated by using height data 46, latitude data 47, and longitude data 48 of the route, and input voltage 50 of three-phase two-level inverter circuit 5001 is adjusted on the basis of the calculated neutron ratio 49.

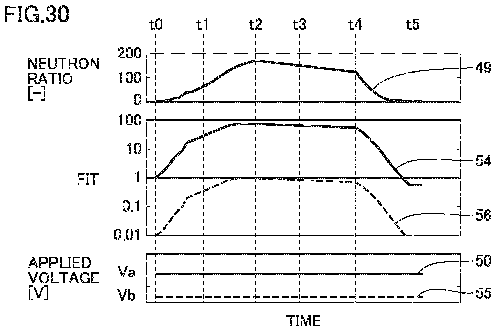

Fig. 30 is a diagram illustrating an example of adjustment of the input voltage of three-phase two-level inverter circuit 5001. Fig. 30 is similar to Fig. 28 with third FIT data 56 and an input voltage 55 added.

As illustrated in Fig. 30, while the aircraft is in flight, input voltage 55 of three-phase two-level inverter circuit 5001 is maintained at a voltage Vb lower than voltage Va. Third FIT data 56 indicates a variation of the FIT when neutron ratio 49 varies under input voltage 55 being a constant voltage Vb. By lowering input voltage 55, third FIT data 56 is suppressed to less than or equal to1 FIT while the aircraft is in flight. Accordingly, the reliability of three-phase two-level inverter circuit 5001 against the SEB is ensured while the aircraft is in flight.

Next, adjustment of the input voltages of the power converters in the power system of aircraft 1000 illustrated in Figs. 1 to 6 will be described.

In the first configuration example (see Fig. 1) and the second configuration example (see Fig. 2) of the power system, the input voltage of DC/AC converter 1007 included in propulsion system 2001 is adjusted depending on neutron ratio 49 calculated from height data 46, latitude data 47, and longitude data 48 of the route. In other words, an output voltage of DC/DC converter 1008 is adjusted.

In the third configuration example of the power system (see Fig. 3), the input voltage of DC/AC converter 1009 included in electrical component system 2002 is adjusted depending on neutron ratio 49. In other words, an output voltage of DC/DC converter 1008b is adjusted.

In the fourth configuration example of the power system (see Fig. 4), the input voltage of DC/DC converter 1010 included in the electrical component system 2003 is adjusted depending on neutron ratio 49. In other words, an output voltage of DC/DC converter 1008c is adjusted.

In the fifth configuration example (see Fig. 5) and the sixth configuration example (see Fig. 6) of the power system, the input voltages of DC/AC converters 1007 and 1009, and DC/DC converter 1010 are adjusted depending on neutron ratio 49. In other words, the output voltages of DC/DC converter 1008, 1008b and 1008c are adjusted.

In any of the configuration examples described above, in a case where the route is determined before aircraft 1000 is in flight, the input voltage of the each of the power converters can be determined in advance from height data 46, latitude data 47, and longitude data 48 of the route as illustrated in Fig. 28.

On the other hand, in a case where the route of the aircraft is unknown in advance, it is necessary to acquire height data 46, latitude data 47, and longitude data 48 while aircraft 1000 is in flight, and determine the input voltage of the each of the power converters based on the acquired data.

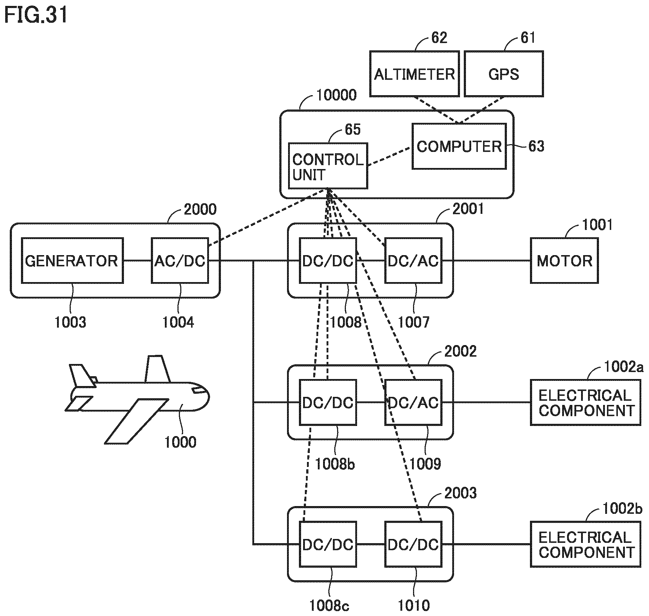

Fig. 31 is a diagram illustrating a configuration example of the power system having a function of adjusting the input voltages of the power converters. The configuration example of the power system illustrated in Fig. 31 is similar to the fifth configuration example of the power system illustrated in Fig. 5 with a global positioning system (GPS) 61 and an altimeter 62 added. Since power source 2000, propulsion system 2001, electrical component systems 2002 and 2003, propulsion system motor 1001, and electrical components 1002a and 1002b are the same as those illustrated in Fig. 5, the description thereof will be omitted.

GPS 61 measures a latitude and a longitude of a current position of aircraft 1000 while aircraft 1000 is in flight, and outputs measured values thereof to control device 10000. Altimeter 62 measures a height of the current position of aircraft 1000, and outputs a measured value thereof to control device 10000. Note that in a case where the height of aircraft 1000 can be calculated from the measured values of GPS 61, altimeter 62 is unnecessary.

Control device 10000 includes a computer 63 and a control unit 65. Computer 63 calculates the neutron ratio at the current position of aircraft 1000 based on the measured values input from GPS 61 and altimeter 62. Computer 63 determines the input voltage of the each of the power converters by using the calculated neutron ratio, and outputs the determined input voltage to control unit 65. Control unit 65 uses the input voltage received from computer 63 as a target value, and adjusts the input voltage of the each of the power converters to be the target value.

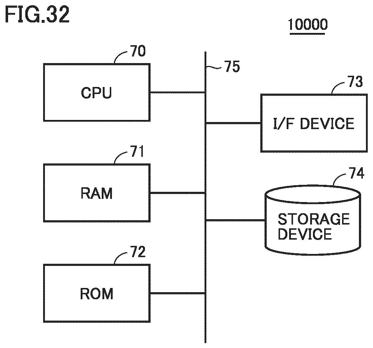

Fig. 32 is a diagram illustrating a hardware configuration of control device 10000. As illustrated in Fig. 29, control device 10000 includes a central processing unit (CPU) 70, a random access memory (RAM) 71, a read only memory (ROM) 72, an interface (I/F) device 73, and a storage device 74. CPU 70, RAM 71, ROM 72, I/F device 73, and storage device 74 exchange various data through a communication bus 75.

CPU 70 develops a program stored in ROM 72 in RAM 71, and executes the program. A process executed by control device 10000 is described in the program stored in ROM 72.

I/F device 73 receives measurement data of various measured values including those of GPS 61 and altimeter 62. In addition, I/F device 73 transmits a control signal for controlling the each of the power converters to the each of the power converters.

Storage device 74 is a storage that stores various types of information, and stores information on the each of the power converters. The information on the each of the power converters includes information on the power semiconductor modules and the semiconductor elements constituting the each of the power converters. In addition, storage device 74 stores information relative to the failure rates of the power converters, the power semiconductor modules, and the semiconductor elements. The information relative to the failure rates includes information relative to the FIT curves illustrated in Figs. 20 to 23. Storage device 74 is, for example, a hard disk drive (HDD) or a solid state drive (SSD).

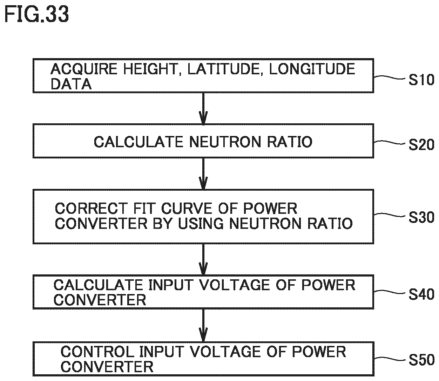

Fig. 33 is a flowchart illustrating an example of a procedure of a process of determining the input voltage of each of the power converters of the power system. A series of processes illustrated in this flowchart is executed by control device 10000 at each predetermined cycle while aircraft 1000 is in flight.

As illustrated in Fig. 32, first, control device 10000 acquires measurement data of the height of aircraft 1000 measured by altimeter 62, and acquires measurement data of the latitude and the longitude of the current position of aircraft 1000 measured by GPS 61 (step S10).

Next, control device 10000 calculates the neutron ratio at the current position of aircraft 1000 by using the measurement data of the height, the latitude, and the longitude of aircraft 1000 (step S20). In S20, control device 10000 calculates the number of the neutrons at the current position of aircraft 1000 based on the acquired measurement data of the height, the latitude, and the longitude. Then, computer 63 calculates a ratio of the number of the neutrons at the current position of aircraft 1000 to the number of the neutrons at the place of 0 m above sea level as the neutron ratio.

Next, control device 10000 corrects a FIT curve acquired in advance by using the calculated neutron ratio for the each of the power converters (step S30). In S30, control device 10000 corrects the FIT curve by substituting the neutron ratio calculated in S20 into expression (3) described above for the each of the power converters.

Next, control device 10000 calculates the input voltage by using the corrected FIT curve for the each of the power converters (step S40). In S40, control device 10000 calculates the input voltage at which the FIT can satisfy the safety design value (for example, less than or equal to 1 FIT) from the corrected FIT curve.

Finally, control device 10000 sets the calculated input voltage as a target value, and adjusts the input voltage of the each of the power converters to be the target value (step S50). For example, control device 10000 controls the output voltage of DC/DC converter 1008 to make the input voltage of DC/AC converter 1007 included in propulsion system 2001 be the target value.

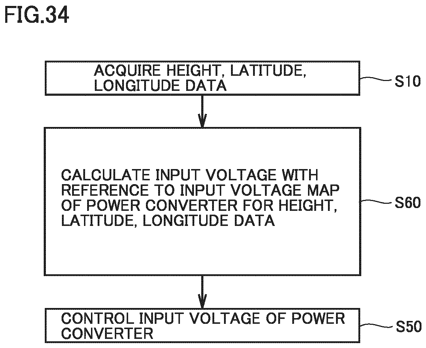

Fig. 34 is a flowchart illustrating another example of the procedure of the process of determining the input voltage of the each of the power converters of the power system. The series of processes illustrated in this flowchart is executed by control device 10000 at the each predetermined cycle while aircraft 1000 is in flight.

In the flowchart illustrated in Fig. 34, the processes of S20 to S40 in the flowchart illustrated in Fig. 33 is replaced with a process of S60.

Upon acquiring the measurement data of the height, the latitude, and the longitude of aircraft 1000 in S 10, control device 10000 calculates the input voltage based on the measurement data by referring to a map created in advance for the each of the power converters (step S60). The map defines a relationship among the height, the longitude, the latitude and the input voltage of the each of the power converters. The map can be created by correcting the FIT curve by using the neutron ratio calculated from the height, the longitude, and the latitude, and obtaining the input voltage at which the FIT satisfies the safety design value in the corrected FIT curve. The map is created in advance, and stored in storage device 74 (see Fig. 32) of control device 10000.

Control device 10000 sets the calculated input voltage as a target value, and adjusts the input voltage of the each of the power converters to be the target value (step S50).

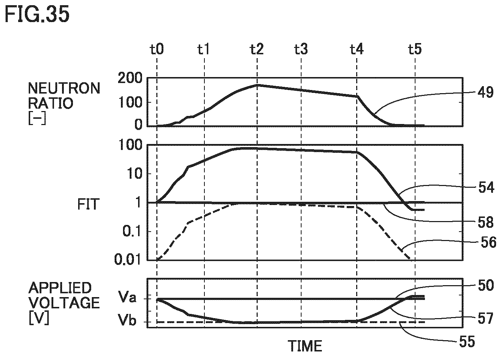

Fig. 35 is a diagram illustrating an example of transition of the FIT when an input voltage of DC/AC converter 1007 of propulsion system 2001 is adjusted. The adjustment of the input voltage of DC/AC converter 1007 illustrated in Fig. 35 is implemented by controlling the output voltage of DC/DC converter 1008.

Note that Fig. 35 illustrates neutron ratio 49 calculated on the basis of height data 46, latitude data 47, and longitude data 48 illustrated in Fig. 25, and second FIT data 54 calculated by using neutron ratio 49 and input voltage 50 (the constant voltage Va). Fig. 35 further illustrates third FIT data 56 calculated by using neutron ratio 49 and input voltage 55 (the constant voltage Vb).

In S20 of Fig. 33, control device 10000 calculates the neutron ratio by using the measurement data of the height, the latitude, and the longitude of aircraft 1000 for each predetermined control cycle. Then, computer 63 corrects the FIT curve of DC/AC converter 1007 acquired in advance by using the calculated neutron ratio in S30 of Fig. 33. In S30, control device 10000 corrects the FIT curve of DC/AC converter 1007 by substituting the neutron ratio calculated in S20 into expression (3) described above. Accordingly, a correlation between the input voltage and the FIT of DC/AC converter 1007 is obtained.

Next, in S40 of Fig. 33, control device 10000 calculates the input voltage when the FIT becomes the safety design value (less than or equal to 1 FIT) by using the corrected FIT curve. Control device 10000 controls the output voltage of DC/DC converter 1008 to be matched with the calculated input voltage in S50 of Fig. 33.

Fig. 35 illustrates an input voltage 57 of DC/AC converter 1007 fluctuating in response to control of DC/DC converter 1008 and fourth FIT data 58 of DC/AC converter 1007 corresponding to input voltage 57. Input voltage 57 of DC/AC converter 1007 varies depending on fluctuation of neutron ratio 49. Specifically, as neutron ratio 49 increases, input voltage 57 decreases. As a result, fourth FIT data 58 transitions around an upper limit value of the safety design value (less than or equal to 1 FIT) while aircraft 1000 is in flight.

As described above, with the power conversion device according to the first embodiment, the input voltage of DC/AC converter 10007 is adjusted by using the FIT curve based on the neutron ratio calculated from the height, the latitude, and the longitude of aircraft 1000, whereby reliability of DC/AC converter 1007 against the SEB can be secured while aircraft 1000 is in flight.

Propulsion system motor 1001 of aircraft 1000 generally require a high output when aircraft 1000 ascends the height from the takeoff, and descends the height to land. On the other hand, since aircraft 1000 flies with a constant load after ascending the height, an output of propulsion system motor 1001 may be lower than that when the aircraft ascends the height and when the aircraft descends the height. Since there is a correlation between the output of the motor and an input voltage of the motor, the output of propulsion system motor 1001 decreases when the input voltage of propulsion system motor 1001 is low. Accordingly, when aircraft 1000 ascends the height from the takeoff and when aircraft 1000 descends the height to land, the input voltage of propulsion system motor 1001 is desirably higher than that after the aircraft ascends the height.

Transition of input voltage 57 illustrated in Fig. 35 also corresponds to such load condition of aircraft 1000. Accordingly, during a period when the neutron ratio decreases, that is, when aircraft 1000 ascends the height and descends the height, input voltage 57 of DC/AC converter 1007 can be set to a high voltage to ensure a necessary motor output.

On the other hand, some electrical components require a constant power while aircraft 1000 is in flight. In this case, the input voltages of corresponding DC/AC converter 1009 and DC/DC converter 1010 may be determined in advance before aircraft 1000 is in flight, and the input voltage may be maintained at the determined voltage during the flight.

### Second embodiment.

In the second embodiment, a configuration in which the input voltage of DC/AC converter 1007 is adjusted depending on a temperature of DC/AC converter 1007 of propulsion system 2001 will be described.

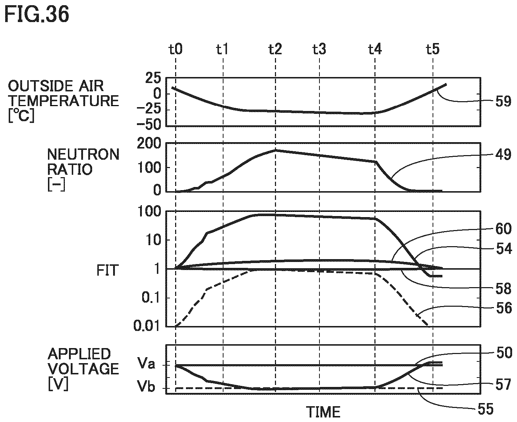

Fig. 36 is a diagram illustrating an example of transition of the FIT according to transition of an outside air temperature 59 while aircraft 1000 is in flight. Fig. 36 assumes a case where a temperature of second semiconductor element 10 constituting DC/AC converter 1007 transitions at the same temperature as outside air temperature 59 during adjustment of input voltage 57 illustrated in Fig. 35. Fig. 36 further illustrates fifth FIT data 60 of DC/AC converter 1007.

According to fifth FIT data 60, it can be seen that the FIT of DC/AC converter 1007 increases as outside air temperature 59 decreases while aircraft 1000 is in flight and the temperature of second semiconductor element 10 decreases. This is because, as illustrated in Fig. 22, the withstand voltage of the semiconductor element decreases as the temperature of the semiconductor element decreases, and thus the FIT increases.

Here, similarly to Fig. 35, if the safety design value is set to less than or equal to 1 FIT, the FIT exceeds the safety design value depending on the decrease in outside air temperature 59, and thus the reliability against the SEB of DC/AC converter 1007 cannot be secured.

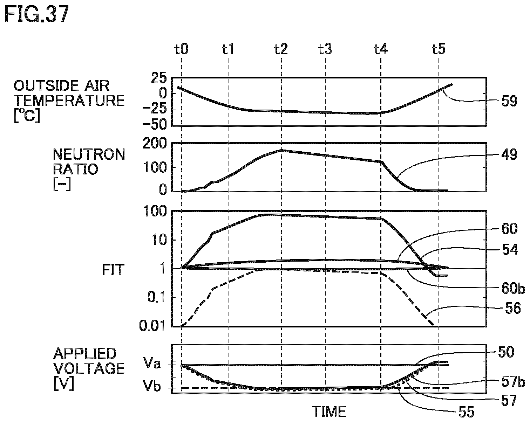

Therefore, in the present embodiment, the input voltage of DC/AC converter 1007 is further adjusted depending on outside air temperature 59. Fig. 37 is a diagram illustrating an example of transition of the FIT when the input voltage of DC/AC converter 1007 is adjusted depending on outside air temperature 59 in propulsion system 2001.

Fig. 37 illustrates an input voltage 57b of DC/AC converter 1007 adjusted depending on transition of outside air temperature 59 and fifth FIT data 60b of DC/AC converter 1007 with respect to transition of input voltage 57b.

As illustrated in Fig. 37, by adjusting input voltage 57b, the fifth FIT data 60b transitions around the upper limit value of the safety design value (less than or equal to 1 FIT) while aircraft 1000 is in flight similarly to fourth FIT data 58. Accordingly, it possible to ensure the reliability of DC/AC converter 1007 against the SEB while aircraft 1000 is in flight.

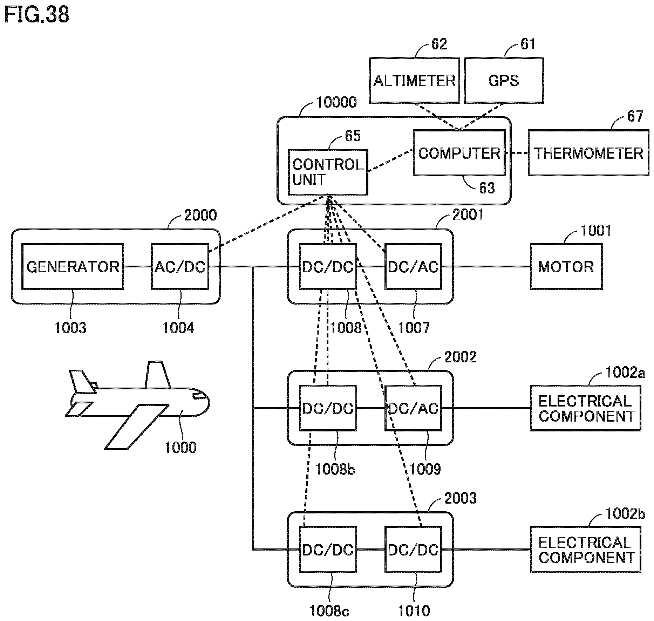

Fig. 38 is a diagram illustrating a configuration example of a power system according to a second embodiment. The configuration example of the power system illustrated in Fig. 38 is similar to the configuration example of the power system illustrated in Fig. 31 with a thermometer 67 added.

Thermometer 67 measures the temperature of the each of the power converters while aircraft 1000 is in flight, and outputs a measured value thereof to control device 10000. Control device 10000 determines the input voltage of the each of the power converters based on the measured values input from GPS 61, altimeter 62, and thermometer 67.

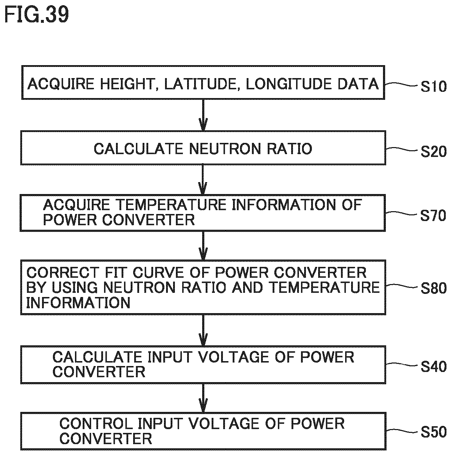

Fig. 39 is a flowchart illustrating an example of the procedure of the process of determining the input voltage of the each of the power converters of the power system. A series of processes illustrated in this flowchart is executed by control device 10000 at each predetermined control cycle while aircraft 1000 is in flight. In the flowchart illustrated in Fig. 39, S30 is replaced with S70 and S40 is replaced with S80, which are in the flowchart illustrated in Fig. 33.

As illustrated in Fig. 39, first, control device 10000 acquires the measurement data of the height of aircraft 1000 measured by altimeter 62, and acquires the measurement data of the latitude and the longitude of the current position of aircraft 1000 measured by GPS 61 (step S10).

Next, control device 10000 calculates the neutron ratio by using the measurement data of the height, the latitude, and the longitude of aircraft 1000 (step S20). In S20, control device 10000 calculates the number of the neutrons at the current position of aircraft 1000 based on the acquired measurement data of the height, the latitude, and the longitude. Then, control device 10000 calculates the ratio of the number of the neutrons at the current position of aircraft 1000 to the number of the neutrons at the place of 0 m above sea level as the neutron ratio.

Next, control device 10000 acquires temperature information on the each of the power converters measured by thermometer 67 (step S70).

Control device 10000 corrects the FIT curve acquired in advance for the each of the power converters by using the neutron ratio calculated in S20 and the temperature information acquired in S30 (step S80). In S80, control device 10000 corrects the FIT curve by substituting the neutron ratio calculated in S20 into expression (3) described above. Further, control device 10000 corrects the FIT curve by using the temperature information acquired in S70.

Next, control device 10000 calculates the input voltage by using the corrected FIT curve for the each of the power converters (step S40). In S40, control device 10000 calculates the input voltage at which the FIT can satisfy the safety design value (for example, less than or equal to 1 FIT) from the corrected FIT curve.

Finally, control device 10000 sets the input voltage calculated in S40 as a target value, and adjusts the input voltage of the each of the power converters to be the target value. For example, control device 10000 controls the output voltage of DC/DC converter 1008 to make the input voltage of DC/AC converter 1007 included in propulsion system 2001 be the target value.

As described above, with the power conversion device according to the second embodiment, the input voltage of the DC/AC converter 10007 is adjusted by using the FIT curve corrected on the basis of the neutron ratio calculated from the height, the latitude and the longitude of aircraft 1000, and the temperature of DC/AC converter 1007, whereby the reliability of DC/AC converter 1007 against SEB can be secured while aircraft 1000 is in flight.

### Third embodiment.

The junction temperature of second semiconductor element 10 constituting DC/AC converter 1007 is not necessarily synchronized with the outside air temperature, and also fluctuates depending on power loss occurring in second semiconductor element 10 and cooling performance of the cooling device. Therefore, in the third embodiment, a method of acquiring the junction temperature of second semiconductor element 10 will be described.

In a case where second semiconductor element 10 has the element structure illustrated in Fig. 16, in order to monitor heat generation of second semiconductor element 10, a thermocouple 24 can be installed between base plate 16 and water-cooling device 23a, and a case temperature Tc can be detected by using thermocouple 24. In this configuration, the junction temperature of second semiconductor element 10 can be estimated from a detection value of case temperature Tc, power supplied to second semiconductor element 10, and thermal resistance from second semiconductor element 10 to base plate 16.

Alternatively, the junction temperature can be estimated by installing a thermistor 25 near second semiconductor element 10 on front electrode 20 and detecting variation of a resistance value of thermistor 25.

Alternatively, the junction temperature can be estimated by installing a temperature sensor 26 including a diode inside second semiconductor element 10 and detecting variation of electrical characteristics of temperature sensor 26.

Alternatively, the junction temperature can be estimated by applying a weak current to second semiconductor element 10 and detecting variation of electrical characteristics due to variation of the temperature.

Alternatively, the junction temperature can be estimated by detecting variation of electrical characteristics of gate resistance of second semiconductor element 10 due to the variation of the temperature.

Alternatively, the temperature of second semiconductor element 10 can be estimated on the basis of a detection value of a temperature of a housing of DC/AC converter 1007.

### Fourth embodiment

In the first to third embodiments described above, a case where the neutrons are taken as the cosmic rays and the SEB occurs due to the collision of the neutrons has been described. However, the SEB can also occur in a case where heavy particles with high energy, protons, or the like collide. Further, an influence of a case where muons, pions, or the like collide is also discussed in a field of fine semiconductors such as memories or the like.

In view of these, if the FIT curve can be acquired in an experiment by simulating the cosmic rays falling on the natural world such as the heavy particles, the protons, the muons, the pions, or the like, the same effect can be obtained by applying the first to fifth embodiments to the SEB due to these cosmic rays.

Note that regarding the embodiments and modifications described above, it is planned from the beginning of filing the application to appropriately combine the configurations described in the embodiments within a range in which no inconvenience or contradiction arises, in addition to combinations without being mentioned in the description.

The embodiments disclosed herein should be considered to be exemplified in all respects and not restrictive. The technical scope indicated by the present disclosure is not indicated by the description of the embodiments described above but by the claims, and is intended to include meanings equivalent to the claims and all modifications within the scope.

### REFERENCE SIGNS LIST

1, 1a, 1b: first semiconductor elements, 1d, 1s, 10d, 10s: diodes, 2: reactor, 3p, 9p: input positive buses, 3n, 9n: input negative buses, 5p: output positive bus, 5n: output negative bus, 6: first power semiconductor module, 7, 8, 13: smoothing capacitors, 10, 10a to 10f: second semiconductor elements, 10m: MOSFET, 11u, 11v, 11w: AC output terminals, 14: second power semiconductor module, 16: base plate, 17, 21: bonding agents, 18: back electrode, 19: insulating material, 20: front electrode, 23a: water-cooling device, 23b: cooling pipe, 24: thermocouple, 25: thermistor, 26: temperature sensor, 27: space, 28: atmosphere, 29: ground surface, 30: cosmic ray, 31: neutron, 32: accelerator, 33: DC power source, 35: voltage-dividing resistor, 36: leakage-measuring resistor, 38, 40 to 45, 51, 52: FIT curves, 39: high withstand-voltage semiconductor element, 46: height data, 47: latitude data, 48: longitude data, 49: neutron ratio, 50, 55, 57, 57b: input voltages, 53, 54, 56, 58, 60, 60b: FIT data, 59: outside air temperature, 61: GPS, 62: altimeter, 63: computer, 65: control unit, 67: thermometer, 70: CPU, 71: RAM, 72: ROM, 73: I/F device, 74: storage device, 75: communication bus, 1000: aircraft, 1001: propulsion system motor, 1002a, 1002b: electrical components, 1003: generator, 1004: AC/DC converter, 1005: battery, 1006, 1008, 1008b, 1008c, 1010: DC/DC converters, 1007, 1009: DC/AC converters, 2000: power source, 2001: propulsion system, 2002, 2003: electrical component systems, 5000, 5000b, 5000c: non-insulated step-down chopper circuits, 5000d: non-insulated step-up chopper circuit, 5001, 5001b, 5001c: three-phase two-level inverter circuits, 10000: control device.

## Claims

1. A power conversion device connected between a power source and a load, the power conversion device comprising:
a first power converter to receive an input of a DC voltage, and generate a voltage to be supplied to the load;
a second power converter to generate an input voltage of the first power converter from a DC voltage of the power source; and
a control device to control the second power converter, wherein
the control device determines the input voltage of the first power converter based on position data indicating a height, a latitude, and a longitude of the power conversion device, and data relative to a failure rate of the first power converter attributable to neutrons, and controls the second power converter to generate the input voltage determined.

2. The power conversion device according to claim 1, further comprising a measuring instrument to collect the position data of the power conversion device, wherein
the control device calculates an amount of neutrons with which the power conversion device is irradiated, by using the position data acquired from the measuring instrument, and determines the input voltage based on correlation data between the failure rate and the input voltage of the first power converter with respect to the amount of neutrons calculated.

3. The power conversion device according to claim 2, wherein the control device determines the input voltage based on a voltage value when the failure rate is less than or equal to a predetermined design value in the correlation data.

4. The power conversion device according to claim 2 or 3, further comprising a detector to acquire temperature information of the first power converter, wherein
the control device corrects the correlation data by using the temperature information acquired from the detector, and determines the input voltage based on the correlation data corrected.

5. The power conversion device according to claim 4, wherein the detector detects an outside air temperature of the power conversion device or a temperature of a semiconductor element mounted on the first power converter.

6. The power conversion device according to any one of claims 2 to 5, wherein
the power source, the load, and the power conversion device are mounted on an aircraft, and
while the aircraft is in flight, the control device calculates the amount of neutrons by using the position data for each control cycle, and determines the input voltage.

7. The power conversion device according to claim 1, further comprising:
a measuring instrument to collect the position data of the power conversion device; and
a storage device to store a map indicating a relationship between a position and the input voltage of the first power converter, wherein
the control device determines, by using the map, the input voltage from the position data acquired from the measuring instrument.

8. The power conversion device according to claim 7, wherein
the power source, the load, and the power conversion device are mounted on an aircraft, and
the control device determines the input voltage from the position data by using the map for each control cycle while the aircraft is in flight.

9. An aircraft comprising:
the power source;
the power conversion device according to any one of claims 1 to 8; and the load.
